# EUROPEAN PATENT SPECIFICATION

(11) **EP 1 332 117 B1**
(45) Date of publication and mention of the grant of the patent: **19.06.2013**
(21) Application number: 01986666.4
(22) Date of filing: 11.10.2001
(51) Int. Cl.: C03C 3/062, C30B 35/00, C03C 1/00, C03C 3/076

(54) **USE OF A GLASS MATERIAL FOR MAKING GLASS MEMBER RESISTANT TO PLASMA CORROSION**
VERWENDUNG EINES GLASSMATERIALS ZUR HERSTELLUNG EINES GLASSTEILES MIT WIDERSTAND GEGEN PLASMAKORROSION
UTILISATION D'UN MATÉRIAU DE VERRE POUR FABRIQUER UN ELEMENT DE VERRE RESISTANT A LA CORROSION D'UN PLASMA

(30) Priority: 13.10.2000 JP 2000314167
(43) Date of publication of application: 06.08.2003
(73) Proprietor: Heraeus Quarzglas GmbH & Co. KG, 63450 Hanau (DE); Shin-Etsu Quartz Products Co., Ltd., Tokyo 160-0023 (JP)
(72) Inventor: SATO, Tatsuhiro, Koriyama-shi, Fukushima 963-0101 (JP); KOYA, Kazuo, Koriyama-shi, Fukushima 963-0101 (JP)
(74) Representative: Staudt, Armin Walter
(86) International application number: PCT/EP2001/011771
(87) International publication number: WO 2002/030840

(56) References cited:
- EP-A- 0 763 504
- EP-A- 0 940 845
- US-A- 6 087 284
- PATENT ABSTRACTS OF JAPAN vol. 1999, no. 13, 30 November 1999 (1999-11-30) & JP 11 228172 A (KOBE STEEL LTD), 24 August 1999 (1999-08-24)
- KIRK OTHMER: "Encyclopaedia of Chemical technology, Third Edition, Volume 11" 1989 , WILEY , NEW YORK USA XP002200436 347 table 3

## Description

### Technological Field of the Invention

The present invention relates to a use of a glass material for making a glass member resistant to plasma corrosion suitable for a jig for use in the production of semiconductors.

### Related Art

Recently, F-based gas is frequently applied as a plasma-etching gas for use in the semiconductor production process. In case quartz glass is used as the member, SiF may generate on the surface of the member. Since the boiling point of SiF is -86 °C, it easily volatilizes as to cause etching on the surface of the quartz member, and this limits the life of the member.

From EP-A 0 940 845 a susceptor for semiconductor manufacturing is known obtained by laminating a plural of aluminum nitride (AIN) ceramic substrates with a high melting point metallic layer, the latter containing an oxide glass from the group SiO₂-Al₂O₃-CaO. It is preferred that as a sintering aid for AIN at least one of Group 3a elements is added. However, since these sintering aids generally become vitreous materials and these vitreous materials are liable to be decomposed by high temperature plasma containing fluorine, further measures are made to make this AIN member suitable for plasma etch processes in semiconductor manufacturing. So, the oxide glass component is added to the metallic layer to enhance the wettability with AIN in the laminate and to accelerate sintering of the particles of the high melting point metal. In consequence all the above measures result in an AIN member which shows high corrosion resistance when used in a plasma atmosphere containing fluorine.

As a means to overcome the problem of generating SiF on the surface of the member as described above, in JP-A-Hei10-45461 is proposed a member containing a compound of a Group 2a or a Group 3a element of the periodic table to use as a member resistant to corrosion against halogen-based plasma; in further detail, there is disclosed an AB₂O₄ type compound containing the elements above together with Al and the like.

Most of the metallic elements above generate a fluoride through their reaction with the F-based gas, and the boiling points of those fluorides are higher than that of SiF. Accordingly, the etching rate of such compounds decreases as compared with that of the quartz glass member, and the usable life thereof can be considerably elongated.

However, among the metallic elements above, many types cause problems when used in the production process of semiconductors. Moreover, in case the corrosion proceeds at the grain boundaries during heating, peeling occurs as to generate particles, and, from the holes of the grain boundaries at which the corrosion has proceeded, discharge gas evolves at a large quantity. If these particles and discharged gases adhere or remain on the wafer, it results in a greatly increased defect ratio in the production of semiconductor devices.

WO-A-99/07651 discloses glass-ceramics which contain crystalline phase and which are useful for example as porcelain stoneware. Because of the crystalline phase, these materials have phase boundaries so that they are not transparent.

In U.S. 4,012,263 A compositions of glasses are disclosed which are suitable for sealing electronic components. The Glasses base on SiO₂ and Al₂O₃ and they contain additional components selected from BaO, MgO, and CaO. Those glasses which contain MgO also contain significant portions of BaO (about 15 wt-%) and CaO (about 12 wt-%), resulting together in a weight portion of BaO+CaO of about 27 wt -%.

SU 579241 A discloses a powder of low expansion glass for coating semiconductor components by plasma spraying or by hot vacuum coating. Its composition ranges is wt% is SiO₂ 35-60, Al₂O₃ 5-25, MgO 5-17, ZnO 15-26, CaO 0.5-6 SrO 0.5-6 and BaO 0.5-6.

US 6,087,284 A relates to a solarization-stable aluminosilicate glass to be used for making plasma display panels. The glass has the following composition (in wt.-%): SiO₂ 45-68; Al₂O₃5-18; Na₂O 0-5; K 9-15; whereby the content of Na₂O+K₂O together is at least 10; CaO 0-10; SrO 0.5-18; BaO 0-10; whereby the content of CaO+SrO+BaO together is in the range of between 8-17; ZrO₂ 1-6; TiO₂ 0.2-5.

### Problems the Invention is to Solve

The present invention has been accomplished in the light of the aforementioned problems, and an object of the present invention is to provide a glass material to be used as a glass member resistant to plasma corrosion suitable for use as a jig material in producing semiconductors, which has excellent corrosion resistance against plasma and yet capable of minimizing the generation of particles.

### Means for Solving the Problems

In order to overcome the problems above, according to the present invention a glass material is used containing one compound component selected from the group consisting of compounds expressed by the chemical formulae (1) to (4) below as the essential component, being defined in that the content of other components is suppressed to 1 mol% or lower, provided that the constitution ratio of the compound components is within the vitrification range.

Chemical (1): SiO₂-Al₂O₃-MgO

Chemical (2): SiO₂-BaO-CaO

Chemical (3): SiO₂-ZrO₂-CaO

Chemical (4): SiO₂-TiO₂-BaO

for making a member made of glass having no boundaries to be exposed to plasma gas and for the purpose of excellent resistance against plasma corrosion, being defined in that the etching rate is reduced to one tenth or less compared to quartz glass.

The glass member resistant to plasma corrosion has been implemented based on the findings that forming a composite material containing a large amount of a metallic element whose fluoride yields a high boiling point can reduce the etching rate due to the reaction with a F-based plasma gas. In case of using the glass member resistant to plasma corrosion according to the present invention, it is preferred to use the metallic element which causes less problems in producing semiconductor devices; for instance, Al is best preferred, but also applicable are Ca, Ba, Zr, Ti, etc., because they can suppress the etched amount and the number of the generated particles.

However, in case of forming a composite member by mixing and firing the metallic elements above in the form of oxides, the constitution ratio of the components must be adjusted within a certain range. Otherwise, the metal oxide components would not mix uniformly with one another, and each of the metal oxides would solidify by themselves as to form boundaries. Thus, plasma corrosion proceeds from the boundaries as to generate particles due to peeling off, and results in gas evolution.

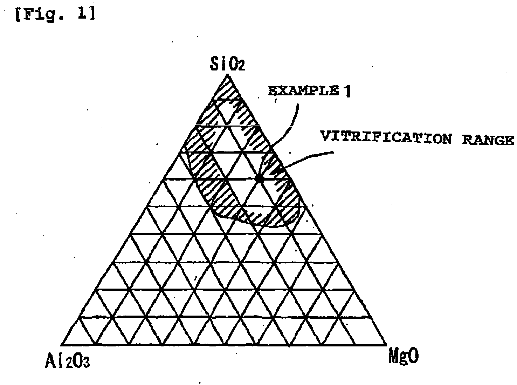

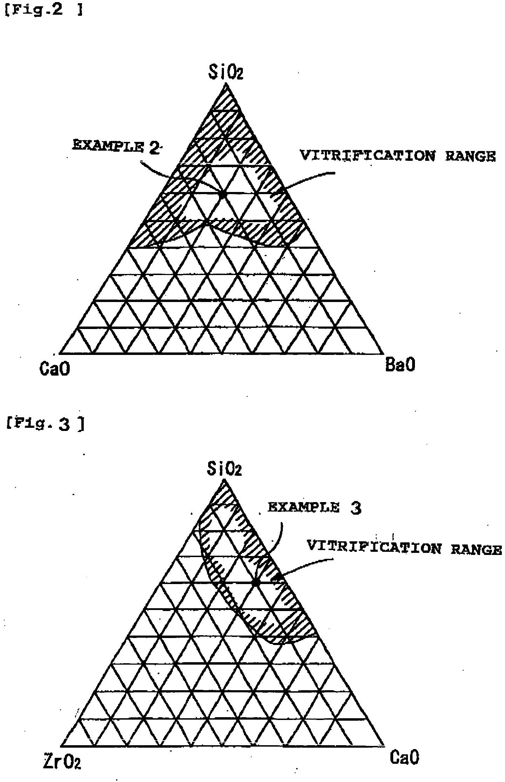

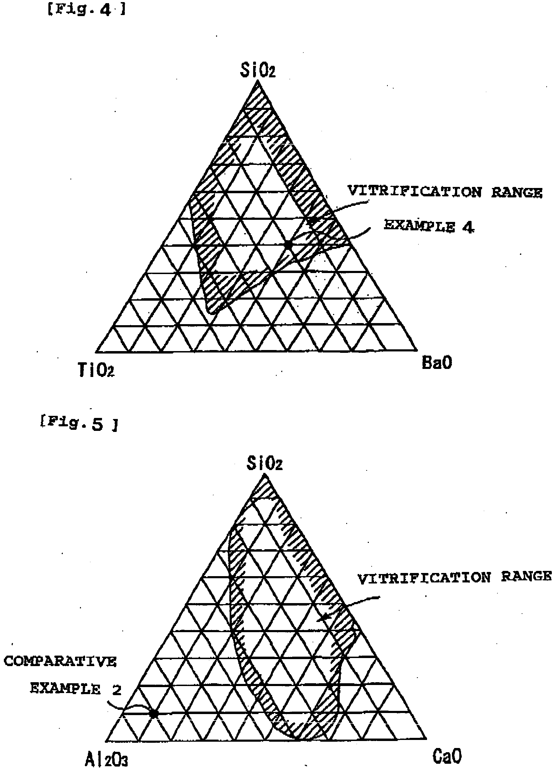

In order to solve the problems above, the mixing ratio of the metal oxides is adjusted to make a glass and suppress the formation of boundaries
Furthermore, by mixing SiO₂ in addition to the components above, a stable composite material having a wide range of vitrification can be obtained. In general, these compounds include SiO₂-Al₂O₃-MgO, i.e., those generally defined as aluminosilicate glass, and those obtained by substituting the Al₂O₃ component thereof by ZrO₂ or TiO₂; however, the constitution ratio (as expressed by mol%) of the components should fall in the range capable of forming a glass as shown in the ternary diagram (see Figs. 1 to 4). In this case, components other than the three components above are sometimes incorporated up to several percents by molar, but preferably, the content thereof is suppressed to 1 mol% or lower.

### Examples

The present invention is described in further detail below by means of specific examples. However, it should be understood that the embodiments below are provided as mere examples and that they are by no means limiting the present invention.

### Examples 1 to 4 and Comparative Examples 1 and 2

The compound components shown in Table 1 are each mixed in accordance with the constitution ratio, and the resulting mixture was placed inside a heating furnace to heat and melt at 1750 °C under vacuum to thereby obtain a glass body 100 mm in diameter and 50 mm in thickness. Each constitution ratio gives one point in each triangular diagramm of figures 1 to 6 below. However, it is expected that mixtures with a deviation of about + 10 % to 30 % from the exact constitution ratio given in the examples will show the same properties concerning suitability for use in the production of semiconductors as long as the mixture falls in the range capable of forming a glass. In Comparative Example 2, however, no vitrification occurred, and it resulted in a non-glassy body in which numerous grain boundaries were observed. The glass bodies or the non-glassy body thus obtained were subjected to the measurement of the transmittance of visible radiation, plasma test (to obtain the etching rate), and the measurement of the number of generated particles. The results are given in Table 1.

The transmittance of visible radiation for the glass bodies obtained in Examples 1 to 4 fell in a range of from 80 to 88 %, which was well comparable to 90%, i.e., the value obtained in Comparative Example 1 (a transparent quartz glass consisting of 100% SiO₂). Hence, the glass bodies obtained in Examples 1 to 4 can be each regarded as a transparent glass body.

In the plasma test, the etching rate of the glass bodies obtained in Examples 1 to 4 fell in a range of from 2 to 8 (nm/min), and was about the same as that obtained in Comparative Example 2; it was found that the etching rates were each reduced to about one-tenth of that obtained in Comparative Example 1 (quartz glass), and that the plasma corrosion resistance of the samples was considerably improved.

The number of particles generated on the glass bodies obtained in Examples 1 to 4 was in a range of from 10 to 27, i.e., about the same as that of the quartz glass in Comparative Example 1; however, it was found that the number of the generated particles was reduced to about 6.6 to 2.4 % of that obtained in Comparative Example 2.

**Table 1**

| | Production method | Constitution ratio of components (mol%) | Transmittance (%) | Etching rate (nm/min) | Particles generated (particles) |
|---|---|---|---|---|---|
| Ex. 1 | Heating in vacuum | Al₂O₃ 10% | 85 | 3 | 27 |
| | | MgO 30% | | | |
| | | SiO₂ 60% | | | |
| Ex. 2 | Heating in vacuum | BaO 20% | 80 | 2 | 17 |
| | | CaO 20% | | | |
| | | SiO₂ 60% | | | |
| Ex. 3 | Heating in vacuum | ZrO₂ 10% | 84 | 8 | 11 |
| | | CaO 30% | | | |
| | | SiO₂ 60% | | | |
| Ex. 4 | Heating in vacuum | TiO₂ 20% | 88 | 6 | 27 |
| | | BaO 40% | | | |
| | | SiO₂ 40% | | | |
| Comp. Ex. 1 | Heating in vacuum | Si02 100% | 90 | 100 | 23 |
| Comp. Ex. 2 | Heating in vacuum | Al₂O₃ 80% | 10 | 5 | 409 |
| | | CaO 10% | | | |
| | | SiO₂ 10% | | | |

The performance tests on the glass bodies or the non-glassy body above were carried out in accordance with the methods below.
(1) Transmittance of visible radiation: A sample 2 mm in thickness was each cut out from the glass bodies or the non-glassy body above, and a visible radiation 1 µm in wavelength was irradiated thereto to measure the transmittance thereof.
(2) Plasma test (etching rate): A sample piece was each cut out from the glass bodies or the non-glassy body above, and the thus obtained samples were each machined to a test piece 30 mm in diameter and 3 mm in thickness, fire-polished on the surface, and were subjected to an etching test to obtain the etching rate by applying 1 kW (Kilowatt) under a vacuum degree of 30 mTorr for a duration of 10 hours while flowing CF₄ gaseous plasma containing mixed therein O₂ (20%) at a rate of 50 sccm ("sccm" means "standard cubic centimeter"; it should be understand that the flow rate is 50 cm³ per minute).
(3) Number of generated particles: After etching the test pieces in the plasma test above, Si wafers having the same area as that of the plasma-irradiated surface of the test pieces were each mounted on the surface of each of the test pieces, and the irregularities of the contact plane of the wafers were detected by means of laser scattering, to thereby count the number of particles 0.3 µm or larger in size by using a particle counter.

### Effect of the Invention

As described above, the glass member resistant to plasma corrosion according to the present invention provides effects as such that it exhibits excellent resistance against plasma corrosion, is free from particle generation, and is suitable for use as a jig material in semiconductor production.

### Brief Description of the Drawings

- Fig. 1: is a ternary diagram showing the vitrification range of SiO₂-Al₂O₃-MgO system and the compositional constitution ratio of Example 1.
- Fig. 2: is a ternary diagram showing the vitrification range of SiO₂-BaO-CaO system and the compositional constitution ratio of Example 2.
- Fig. 3: is a ternary diagram showing the vitrification range of SiO₂-ZrO₂-CaO system and the compositional constitution ratio of Example 3.
- Fig. 4: is a ternary diagram showing the vitrification range of SiO₂-TiO₂-BaO system and the compositional constitution ratio of Example 4.
- Fig. 5: is a ternary diagram showing the vitrification range of SiO₂-Al₂O₃-CaO system and the compositional constitution ratio of Comparative Example 2.

## Claims

1. Use of a glass material containing one compound component selected from the group consisting of compounds expressed by the chemical formulae (1) to (4) below as the essential component, being defined in that the content of other components is suppressed to 1 mol% or lower, provided that the constitution ratio of the compound components is within the vitrification range.
Chemical 1 SiO₂-Al₂O₃-MgO (1)
Chemical 2 SiO₂-BaO-CaO (2)
Chemical 3 SiO₂-ZrO₂-CaO (3)
Chemical 4 SiO₂-TiO₂-BaO (4)
for making a member made of glass having no boundaries to be exposed to plasma gas and for the purpose of excellent resistance against plasma corrosion, being defined in that the etching rate is reduced to one tenth or less compared to quartz glass.

2. Use according to claim 1 wherein the constitution ratio of the components of the chemical formulae (1) is in the following range:
| | |
|---|---|
| SiO₂ | 50 to 70 mol% |
| Al₂O₃ | 5 to 20 mol % |
| MgO | 20 to 40 mol%. |

3. Use according to claim 1 or 2 wherein the constitution ratio of the components of the chemical formulae (1) is 60 mol% SiO₂ , 10 mol% Al₂O₃ , 30 mol% MgO

4. Use according to claim 1 wherein the constitution ratio of the components of the chemical formulae (2) is in the following range:
| | |
|---|---|
| SiO₂ | 50 to 80 mol% |
| BaO | 10 to 40 mol % |
| CaO | 10 to 50 mol%. |

5. Use according to claim 1 or 4 wherein the constitution ratio of the components of the chemical formulae (2) is 60 mol% SiO₂ , 20 mol % BaO, 20 mol % CaO.

6. Use according to claim 1 wherein the constitution ratio of the components of the chemical formulae (3) is in the following range:
| | |
|---|---|
| SiO₂ | 50 to 70 mol% |
| ZrO₂ | 5 to 20 mol % |
| CaO | 20 to 40 mol%. |

7. Use according to claim 1 or 6 wherein the constitution ratio of the components of the chemical formulae (3) is 60 mol % SiO₂ , 10 mol % ZrO2, 30 mol % CaO.

8. Use according to claim 1 wherein the constitution ratio of the components of the chemical formulae (4) is in the following range:
| | |
|---|---|
| SiO₂ | 35 to 50 mol% |
| BaO | 30 to 40 mol % |
| TiO₂ | 10 to 30 mol%. |

9. Use according to claim 1 or 8 wherein the constitution ratio of the components of the chemical formulae (4) is 40 mol % SiO₂ , 40 mol % BaO, 20 mol % TiO₂.

## Patentansprüche

1. Verwendung eines Glases enthaltend eine Verbindungs-Substanz, ausgewählt aus der Gruppe, welche aus Verbindungen besteht, die im Wesentlichen anhand der folgenden chemischen Formeln (1) bis (4) beschrieben sind, wobei der Gehalt anderer Komponenten auf 1 mol.- % oder weniger gehalten wird und unter der Maßgabe, dass das Verhältnis der Komponenten innerhalb des Verglasungsbereichs liegt.
Substanz 1 SiO₂-Al₂O₃-MgO (1)
Substanz 2 SiO₂-BaO-CaO (2)
Substanz 3 SiO₂-ZrO₂-CaO (3)
Substanz 4 SiO₂-TiO₂-BaO (4)
für die Herstellung eines Bauteils aus Glas ohne Korngrenzen für den Einsatz mit Plasmagas und zum Zweck eine guten Korrosionsbeständigkeit gegenüber Plasma, die dadurch definiert ist, dass die Ätzrate auf ein Zehntel oder weniger im Vergleich zu Quarzglas reduziert wird.

2. Verwendung nach Anspruch 1, **dadurch gekennzeichnet, dass** das Zusammensetzungsverhältnis der Komponenten bei der chemischen Formel (1) im folgenden Bereich liegt:
| | |
|---|---|
| SiO₂ | 50 bis 70 mol.-% |
| Al₂O₃ | 5 bis 20 mol.-% |
| MgO | 20 bis 40 mol.-%. |

3. Verwendung nach Anspruch 1 oder 2, **dadurch gekennzeichnet, dass** das Zusammensetzungsverhältnis der Komponenten bei der chemischen Formel (1) beträgt: 60 mol.-% SiO₂ , 10 mol.-% Al₂O₃, 30 mol.-% MgO.

4. Verwendung nach Anspruch 1, **dadurch gekennzeichnet, dass** das Zusammensetzungsverhältnis der Komponenten bei der chemischen Formel (2) im folgenden Bereich liegt:
| | |
|---|---|
| SiO₂ | 50 bis 80 mol.-% |
| BaO | 10 bis 40 mol.-% |
| CaO | 10 bis 50 mol.-%. |

5. Verwendung nach Anspruch 1 oder 4, **dadurch gekennzeichnet, dass** das Zusammensetzungsverhältnis der Komponenten bei der chemischen Formel (2) beträgt: 60 mol.-% SiO₂ , 20 mol.-% BaO, 20 mol.-% CaO.

6. Verwendung nach Anspruch 1, **dadurch gekennzeichnet, dass** das Zusammensetzungsverhältnis der Komponenten bei der chemischen Formel (3) im folgenden Bereich liegt:
| | |
|---|---|
| SiO₂ | 50 bis 70 mol.-% |
| ZrO₂ | 5 bis 20 mol.-% |
| CaO | 20 bis 40 mol.-%. |

7. Verwendung nach Anspruch 1 oder 6, **dadurch gekennzeichnet, dass** das Zusammensetzungsverhältnis der Komponenten bei der chemischen Formel (3) beträgt: 60 mol.-% SiO₂ , 10 mol.-% Zr02 , 30 mol.-% CaO.

8. Verwendung nach Anspruch 1, **dadurch gekennzeichnet, dass** das Zusammensetzungsverhältnis der Komponenten bei der chemischen Formel (4) im folgenden Bereich liegt:
| | |
|---|---|
| SiO₂ | 35 bis 50 mol.-% |
| BaO | 30 bis 40 mol.-% |
| TiO₂ | 10 bis 30 mol.-%. |

9. Verwendung nach Anspruch 1 oder 8, **dadurch gekennzeichnet, dass** das Zusammensetzungsverhältnis der Komponenten bei der chemischen Formel (4) beträgt: 40 mol.-% SiO₂ , 40.-mol.-% BaO , 20 mol.-% TiO₂.

## Revendications

1. Utilisation d'un matériau de verre contenant un élément composite sélectionné parmi le groupe constitué des éléments exprimés ci-dessous par les formules chimiques (1) à (4) en tant que composant essentiel, ceci étant défini dans le fait que la teneur des éléments est ramenée à 1 mol% ou moins, à condition que le rapport des éléments composites soit compris dans la plage de vitrification.
Produit chimique 1 SiO₂-Al₂0₃-MgO (1)
Produit chimique 2 SiO₂-BaO-CaO (2)
Produit chimique 3: SiO₂-ZrO₂-CaO (3)
Produit chimique 4 Si0₂-TiO₂-CaO (4).
pour réaliser un organe en verre n'ayant aucune contrainte devant être exposé au gaz plasma et dans le but d'une excellente résistance à la corrosion plasma, ceci étant défini dans le fait que le taux d'attaque est réduit à un dixième ou moins comparé au verre de quartz.

2. Utilisation selon la revendication 1, dans laquelle le rapport de composition des composants de la formule chimique (1) est compris dans les plages suivantes :
SiO₂ de 50 à 70% en moles
Al₂0₃ de 5 à 20 % en mole
MgO de 20 à 40% en moles.

3. Utilisation selon la revendication 1 ou 2, dans laquelle le rapport de composition des composants de la formule chimique (1) est de 60% en moles de SiO₂, de 10% en moles d'Al₂O₃, de 30 % en moles de MgO.

4. Utilisation selon la revendication 1, dans laquelle le rapport de composition des composants de la formule chimique (2) est compris dans la plage suivante :
Si0₂ de 50 à 80% en moles
BaO de 10 à 40% en moles
CaO de 10 à 50% en moles.

5. Utilisation selon la revendication 1 ou 4, dans laquelle le rapport de composition des composants de la formule chimique (2) est de 60% en moles de Si0₂, de 20% en moles de BaO, de 20% en moles de CaO.

6. Utilisation selon la revendication 1, dans laquelle le rapport de composition des composants de la formule chimique (3) est dans la plage suivante :
Si0₂ de 50 à 70% en moles
ZrO₂ de 5 à 20% en moles
CaO de 20 à 40% en moles.

7. Utilisation selon la revendication 1 ou 6, dans laquelle le rapport de composition des composants de la formule chimique (3) est de 60% en moles de Si0₂, de 10% en moles de ZrO₂, de 30% en moles de CaO.

8. Utilisation selon la revendication 1, dans laquelle le rapport de composition des éléments de la formule chimique (4) est compris dans la plage suivante :
Si0₂ de 35 à 50 % en moles
BaO de 30 à 40% en moles
TiO₂ de 10 à 30% en moles.

9. Utilisation selon la revendication 1 ou 8, dans laquelle le rapport de composition des éléments de la formule chimique (4) est de 40% en moles de Si0₂, de 40% en moles de BaO, de 20 moles% de TiO₂.
